# EUROPEAN PATENT APPLICATION

(11) **EP 3 557 312 A1**
(43) Date of publication of application: **23.10.2019**
(21) Application number: 17881778.9
(22) Date of filing: 30.10.2017
(51) Int. Cl.: G02B 27/28, C03C 3/16, C03C 4/00, G02B 5/30, G02F 1/09

(54) **MAGNETO-OPTIC ELEMENT**

(30) Priority: 15.12.2016 JP 2016243227; 27.07.2017 JP 2017145156
(71) Applicant: Nippon Electric Glass Co., Ltd., Otsu-shi, Shiga 520-8639 (JP)
(72) Inventor: SUZUKI Futoshi, Otsu-shi Shiga 520-8639 (JP)
(74) Representative: Tetzner, Michael
(86) International application number: PCT/JP2017/039054
(87) International publication number: WO 2018/110122

(57) **Abstract**

Provided is a magneto-optic element that enables size reduction of an optical isolator without damaging the magneto-optic element even if the diameter of the magneto-optic element is reduced. A magneto-optic element is made of a columnar glass material with a diameter of 20 mm or less and has a laser damage threshold of 10 J/cm² or more.

## Description

### [Technical Field]

The present invention relates to magneto-optic elements, such as Faraday rotators.

### [Background Art]

Optical isolators are electronic components that transmit light in a single direction and block reflected return light and are used in laser diodes for use in optical communication systems, laser processing systems, and so on. An optical isolator includes a magneto-optic element, a magnet, and polarizers.

In the past, glass having a content of Tb₂O₃ of 20% by mole or less has been used as a magneto-optic element for use in an optical isolator (see, for example, Patent Literature 1).

### [Citation List]

### [Patent Literature]

[PTL 1]
JP-A-H05-178638

### [Summary of Invention]

### [Technical Problem]

Recently, there is demand for size reduction of optical isolators. A reduction in the diameter of a magneto-optic element enables an increase in the magnetic field applied to the magneto-optic element, which enables a reduction in the volume of a magnet and in turn a reduction in the size of an optical isolator. However, with the use of the above-mentioned glass as the magneto-optic element, the reduction in the diameter of the magneto-optic element presents a problem that the magneto-optic element is damaged by laser light.

In view of the foregoing, an object of the present invention is to provide a magneto-optic element that enables size reduction of an optical isolator without damaging the magneto-optic element even if the diameter of the magneto-optic element is reduced.

### [Solution to Problem]

A magneto-optic element according to the present invention is made of a columnar glass material with a diameter of 20 mm or less and has a laser damage threshold of 10 J/cm² or more. Since the diameter of the magneto-optic element is 20 mm or less, the diameter of a through hole of a tubular magnet can be small, so that the magnetic field applied to the glass material can be increased. Thus, the volume of the tubular magnet can be reduced, resulting in size reduction of an optical isolator. On the other hand, the reduction in the diameter of the magneto-optic element increases the energy per unit area applied to the magneto-optic element because of focusing of laser light. However, since the laser damage threshold of the magneto-optic element is 10 J/cm² or more, the magneto-optic element is less likely to be damaged.

In the magneto-optic element according to the present invention, the magneto-optic element for use preferably has a length of 2 to 20 mm. Thus, an optical isolator can be easily reduced in size.

The magneto-optic element according to the present invention preferably contains, in % by mole, more than 50% (exclusive of 50%) Tb₂O₃ and 5 to 50% (exclusive of 5% and 50%) P₂O₅. A large amount of Tb₂O₃ contained in the magneto-optic element as described above gives a large Verdet constant, which makes it easier to reduce the volume of a tubular magnet and in turn makes it easier to reduce the size of an optical isolator.

An optical isolator according to the present invention includes the above-described magneto-optic element, a tubular magnet in which a through hole is formed to allow the magneto-optic element to be inserted through the through hole, and a pair of polarizers provided above two opposite principal surfaces of the magneto-optic element.

In the optical isolator according to the present invention, the through hole of the tubular magnet preferably has a diameter of 2 to 21 mm.

In the optical isolator according to the present invention, the tubular magnet preferably has a volume of 20 to 100 cm³.

### [Advantageous Effects of Invention]

The present invention enables provision of a magneto-optic element that enables size reduction of an optical isolator without damaging the magneto-optic element even if the diameter of the magneto-optic element is reduced.

### [Brief Description of Drawings]

Fig. 1 is a schematic cross-sectional view showing a basic structure of an optical isolator.
Fig. 2 is a schematic cross-sectional view showing an example of an apparatus for producing a glass by a containerless levitation technique.

### [Description of Embodiments]

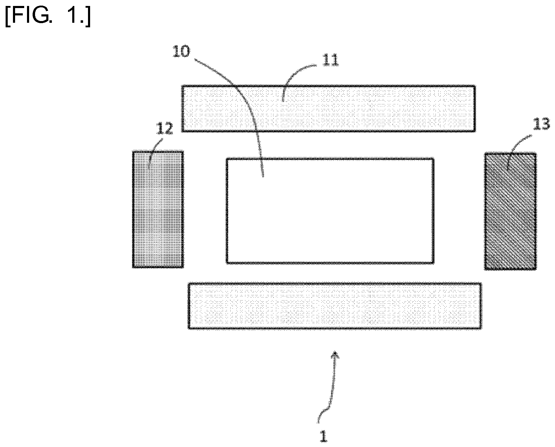

First, a description will be given of the principle and structure of an optical isolator with reference to Fig. 1.

Fig. 1 is a schematic cross-sectional view showing a basic structure of an optical isolator.

The optical isolator 1 is a device for blocking reflected return light of laser light and includes a magneto-optic element 10, a tubular magnet 11 provided with a through hole for insertion of the magneto-optic element (a Faraday rotator) 10, and a pair of polarizers 12, 13 provided above two opposite principal surfaces of the magneto-optic element. Light incident on the optical isolator 1 passes through the polarizer 12 to become linearly polarized light and then enters the magneto-optic element 10. The light incident on the magneto-optic element 10 is rotated 45° by the magneto-optic element 10 and then passes through the polarizer 13 having a light transmission axis inclined at 45°. Part of the light having passed through the polarizer 13 becomes reflected return light and passes through the polarizer 13 with the polarization plane oriented at an angle of 45°. The reflected return light having passed through the polarizer 13 is further rotated 45° by the magneto-optic element 10 to have a perpendicular polarization plane making an angle of 90° with the light transmission axis of the polarizer 12, therefore cannot penetrate the polarizer 12, and is blocked by the polarizer 12.

Hereinafter, each of the components will be described.

### (Magneto-Optic Element 10)

The magneto-optic element 10 according to the present invention is made of a columnar glass material. The diameter of the glass material is 20 mm or less, preferably 15 mm or less, more preferably 10 mm or less, even more preferably 8 mm or less, still more preferably 6 mm or less, yet still more preferably 5.5 mm or less, yet still more preferably 5 mm or less, yet still more preferably 4.5 mm or less, yet still more preferably 4 mm or less, yet still more preferably 3.8 mm or less, yet still more preferably 3.5 mm or less, and particularly preferably 3.4 mm or less. If the diameter of the glass material is too large, the diameter of the through hole of the tubular magnet becomes large, so that the magnetic field applied to the glass material is likely to be small. There is therefore a need to increase the volume of the tubular magnet, which makes it difficult to reduce the size of the optical isolator 1. No particular limitation is placed on the lower limit of the diameter of the glass material, but it is, on a realistic level, 0.5 mm or more.

The diameter of focused laser light is normally adjusted to become smaller than the diameter of the magneto-optic element. The diameter of the magneto-optic element 10 according to the present invention is 20 mm or less and, therefore, the diameter of focused laser light needs to be reduced according to the diameter of the magneto-optic element 10. If the diameter of focused laser light is reduced, the energy per unit area applied to the magneto-optic element 10 is increased, so that the magneto-optic element 10 is more likely to be damaged. Therefore, the laser damage threshold of the magneto-optic element 10 is 10 J/cm² or more, preferably 13 J/cm² or more, more preferably 15 J/cm² or more, even more preferably 17 J/cm² or more, still more preferably 20 J/cm² or more, yet still more preferably 22 J/cm² or more, and particularly preferably 25 J/cm² or more. No particular limitation is placed on the upper limit of the laser damage threshold, but it is, on a realistic level, 500 J/cm² or less.

The length of the magneto-optic element 10 according to the present invention is preferably 2 to 20 mm, more preferably 3 to 19 mm, even more preferably 5 to 18.5 mm, still more preferably 7.5 to 18 mm, yet still more preferably 8 to 18 mm, yet still more preferably 8.1 to 17 mm, yet still more preferably 8.2 to 16 mm, and particularly preferably 8.3 to 15.5 mm. If the length of the magneto-optic element 10 is too small, there arises a need to increase the magnetic field, that is, increase the size of the tubular magnet 11, which makes it difficult to reduce the size of the optical isolator 1. On the other hand, if the length of the magneto-optic element 10 is too large, the optical isolator 1 is less likely to be reduced in size.

The magneto-optic element according to the present invention preferably contains, in % by mole, more than 50% (exclusive of 50%) Tb₂O₃ and 5 to 50% (exclusive of 5% and 50%) P₂O₅. The reasons why the glass composition is defined as above will be described below. In the following description of the contents of components, "%" refers to "% by mole" unless otherwise specified.

Tb₂O₃ is a component for increasing the absolute value of the Verdet constant to increase the Faraday effect. The content of Tb₂O₃ is preferably more than 50% (exclusive of 50%), more preferably 51% or more, and particularly preferably 52% or more. If the content of Tb₂O₃ is too small, the absolute value of the Verdet constant becomes small, so that a sufficient Faraday effect is less likely to be achieved. On the other hand, if the content of Tb₂O₃ is too large, vitrification tends to become difficult. Therefore, the content of Tb₂O₃ is preferably not more than 75%, more preferably not more than 70%, and particularly preferably not more than 69%.

Note that the content of Tb₂O₃ in the present invention is represented by calculationally converting all elements of Tb present in the glass to trivalent oxides.

As for Tb, the magnetic moment from which the Verdet constant is derived is greater in Tb³⁺ than in Tb⁴⁺. A larger percentage of Tb³⁺ in the glass material is more preferable because the Faraday effect becomes larger. Specifically, the percentage of Tb³⁺ in the total content of Tb is, in % by mole, preferably 50% or more, more preferably 60% or more, still more preferably 70% or more, yet still more preferably 80% or more, and particularly preferably 90% or more.

P₂O₅ is a component for increasing the resistance to laser damage. P₂O₅ also has the effect of forming a glass network and widening the vitrification range. The content of P₂O₅ is preferably 5 to 50% (exclusive of 5% and 50%), more preferably 5.1 to 45%, still more preferably 5.5 to 40%, yet still more preferably 5.7 to 30%, and particularly preferably 6 to 25%. If the content of P₂O₅ is too small, the above effects are less likely to be achieved. On the other hand, if the content of P₂O₅ is too large, a sufficient Faraday effect is less likely to be achieved. In addition, the thermal stability is likely to decrease.

The glass material for use in the present invention may contain, in addition to the above components, the following various components.

B₂O₃ is a component for forming a glass network and widening the vitrification range. However, B₂O₃ does not contribute to an increase in the Verdet constant. Therefore, if its content is too large, a sufficient Faraday effect is less likely to be achieved. Hence, the content of B₂O₃ is preferably 0 to 45% (exclusive of 45%), more preferably 1 to 44%, still more preferably 2 to 40%, and particularly preferably 5 to 35%.

Al₂O₃ is a component for forming a glass network as an intermediate oxide and widening the vitrification range. However, Al₂O₃ does not contribute to an increase in the Verdet constant. Therefore, if its content is too large, a sufficient Faraday effect is less likely to be achieved. Hence, the content of Al₂O₃ is preferably 0 to 45% (exclusive of 45%), more preferably 0.1 to 40%, still more preferably 0.5 to 30%, yet still more preferably 0.8 to 20%, and particularly preferably 1 to 15%.

SiO₂ is a component for forming a glass network and widening the vitrification range. However, SiO₂ does not contribute to an increase in the Verdet constant. Therefore, if its content is too large, a sufficient Faraday effect is less likely to be achieved. Hence, the content of SiO₂ is preferably 0 to 45% (exclusive of 45%), more preferably 0 to 40%, still more preferably 0 to 30%, and particularly preferably 0 to 20%.

La₂O₃, Gd₂O₃, Yb₂O₃, and Y₂O₃ have the effect of stabilizing vitrification, but an excessive large content of each of them contrariwise makes vitrification difficult. Therefore, the content of each of La₂O₃, Gd₂O₃, Yb₂O₃, and Y₂O₃ is preferably 10% or less and particularly preferably 5% or less.

Dy₂O₃, Eu₂O₃, and Ce₂O₃ stabilize vitrification and contributes to an increase in the Verdet constant. However, an excessive large content of each of them contrariwise makes vitrification difficult. Therefore, the content of each of Dy₂O₃, Eu₂O₃, and Ce₂O₃ is preferably 15% or less and particularly preferably 10% or less. Note that the content of each of Dy₂O₃, Eu₂O₃, and Ce₂O₃ is represented by calculationally converting all elements of each of Dy, Eu, and Ce components present in the glass to their trivalent oxides.

MgO, CaO, SrO, and BaO have the effect of increasing the vitrification stability and the chemical durability of glass. However, these components do not contribute to an increase in the Verdet constant. Therefore, if the content of each of them is too large, a sufficient Faraday effect is less likely to be achieved. Hence, the content of each of these components is preferably 0 to 10% and particularly preferably 0 to 5%.

Ga₂O₃ has the effect of increasing the glass formation ability and widening the vitrification range. However, an excessive large content thereof is likely to cause devitrification. Furthermore, Ga₂O₃ does not contribute to an increase in the Verdet constant. Therefore, if its content is too large, a sufficient Faraday effect is less likely to be achieved. Hence, the content of Ga₂O₃ is preferably 0 to 6%, more preferably 0 to 5%, and particularly preferably 0 to 4%.

Fluorine has the effect of increasing the glass formation ability and widening the vitrification range. However, if its content is too large, fluorine volatilizes during melting, which may cause composition variations or may have an influence on the vitrification stability. Therefore, the content of fluorine (in terms of F₂) is preferably 0 to 10%, more preferably 0 to 7%, and particularly preferably 0 to 5%.

Sb₂O₃ may be added as a reductant. However, in order to avoid coloration or in consideration of environmental burden, the content of Sb₂O₃ is preferably 0.1% or less.

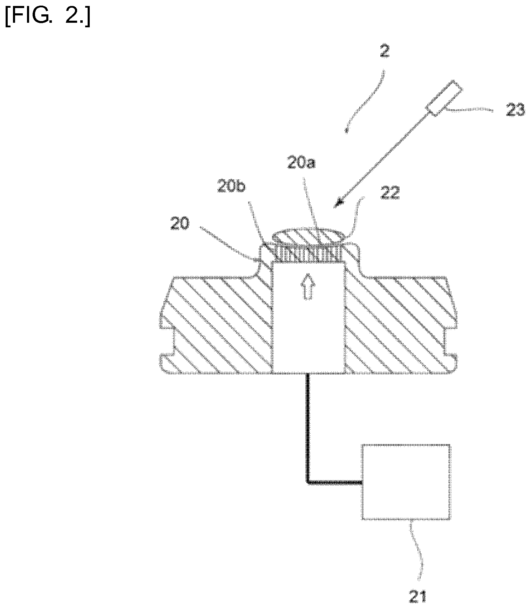

The glass material for use in the present invention can be produced, for example, by a containerless levitation technique. Fig. 2 is a schematic cross-sectional view showing an example of an apparatus for producing a glass material by a containerless levitationtechnique. Hereinafter, a description will be given of a method for producing a glass material for use in the present invention with reference to Fig. 2.

The apparatus 2 for producing a glass material includes a forming die 20. The forming die 20 also serves as a melting container. The forming die 20 includes a forming surface 20a and a plurality of gas jet holes 20b opening on the forming surface 20a. The gas jet holes 20b are connected to a gas supply mechanism 21, such as a compressed gas cylinder. Gas is supplied from this gas supply mechanism 21 via the gas jet holes 20b to the forming surface 20a. No particular limitation is placed on the type of the gas and the gas may be, for example, air or oxygen or may be nitrogen gas, argon gas, helium gas, carbon monoxide gas, carbon dioxide gas or hydrogen-containing reducing gas.

In producing a glass material using the production apparatus 2, first, a block 22 of glass raw material is placed on the forming surface 20a. Examples of the block 22 of glass raw material include a body obtained by forming raw material powders into a single piece by press forming or other processes, a sintered body obtained by forming raw material powders into a single piece by press forming or other processes and then sintering the single piece, and an aggregate of crystals having the same composition as a desired glass composition.

Next, gas is jetted out through the gas jet holes 20b, thus levitating the block 22 of glass raw material above the forming surface 20a. In other words, the block 22 of glass raw material is held out of contact with the forming surface 20a. In this state, the block 22 of glass raw material is irradiated with laser light from a laser light applicator 23. Thus, the block 22 of glass raw material is heated to melting and made vitrifiable, thus obtaining a molten glass. Thereafter, the molten glass is cooled, so that a glass material can be obtained. During the step of heating the block 22 of glass raw material to melting and the step of cooling the molten glass and in turn the glass material at least to below the softening point, at least the jetting of gas is preferably continued to restrain the contact of the block 22 of glass raw material, the molten glass, and finally the glass material with the forming surface 20a. Alternatively, the block 22 of glass raw material may be levitated above the forming surface 20a using a magnetic force generated by the application of a magnetic field or may be levitated above the forming surface 20a using sonic waves. The method for heating the block of glass raw material to melting may be radiation heating, besides the method of irradiating it with laser light. The magneto-optic element 10 according to the present invention is obtained by subjecting the obtained glass material to processing, including cutting, polishing, and pressing, into a desired columnar shape.

### (Tubular Magnet 11)

The tubular magnet 11 is tubular, such as cylindrical, and the diameter of its through hole is preferably 1 to 21 mm, more preferably 1 to 16 mm, even more preferably 2 to 14 mm, still more preferably 2.5 to 12 mm, yet still more preferably 3 to 11 mm, yet still more preferably 3 to 10 mm, and particularly preferably 3 to 9 mm. If the diameter of the through hole of the tubular magnet 11 is too small, the diameter of the magneto-optic element 10 becomes small, so that the diameter of focused laser light also becomes small. Therefore, the energy per unit area applied to the magneto-optic element 10 becomes large, so that the magneto-optic element 10 is likely to be damaged. On the other hand, if the diameter of the through hole of the tubular magnet 11 is too large, a magnetic field is less likely to be applied to the magneto-optic element 10. There is therefore a need to increase the size of the tubular magnet 11, which makes it difficult to reduce the size of the optical isolator 1.

The volume of the tubular magnet 11 is preferably 20 to 100 cm³, more preferably 20 to 45 cm³, still more preferably 21 to 44 cm³, yet still more preferably 22 to 43 cm³, and particularly preferably 25 to 40 cm³. If the volume of the tubular magnet 11 is too small, a desired magnetic field is less likely to be applied to the magneto-optic element 10. On the other hand, if the volume of the tubular magnet 11 is too large, the optical isolator 1 is less likely to be reduced in size.

The preferred material for the tubular magnet 11 is a neodymium-iron-boron-based material having a high magnetic field intensity. Alternatively, in order to a higher magnetic field intensity, a plurality of tubular magnets may be combined.

### (Polarizers 12 and 13)

The material for the polarizers 12 and 13 may be a ceramic, a glass or a polymeric material, but the preferred is a material having a high polarization extinction ratio. Specifically, the material is preferably a material having a polarization extinction ratio of 20 dB or more, more preferably 30 dB or more, still more preferably 40 dB or more, and particularly preferably 50 dB or more.

### [Examples]

The present invention will be described below with reference to examples but the present invention is not at all limited by the following examples.

Table 1 shows examples of the present invention and a comparative example.

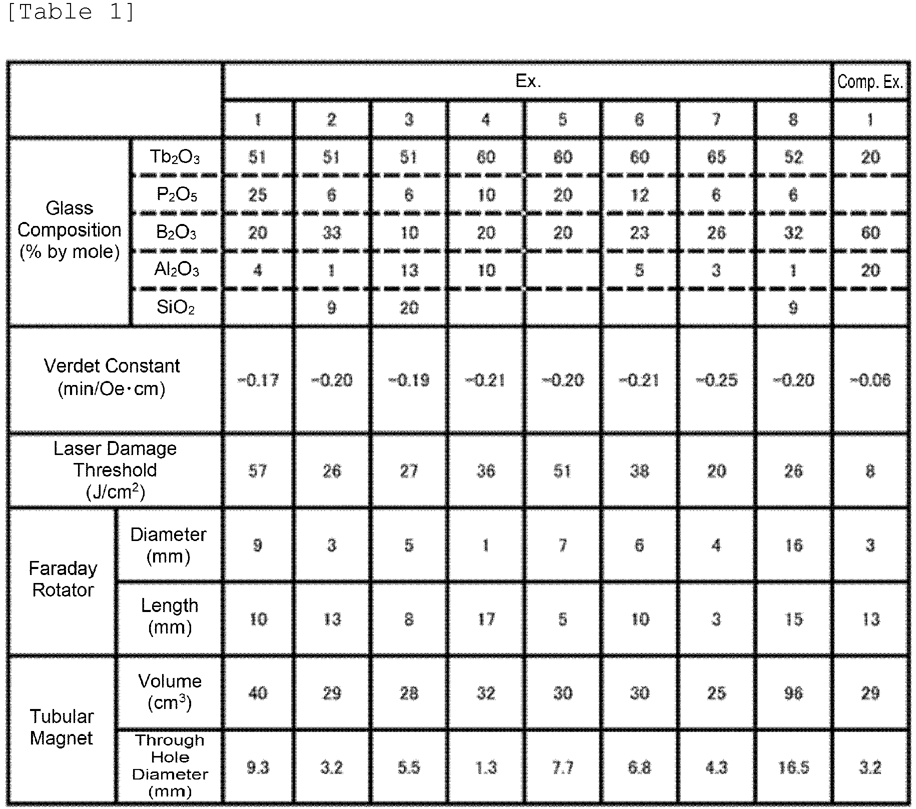

Each sample was produced in the following manner. First, raw materials formulated to have a glass composition shown in Table 1 were pressed into a shape and sintered at 700 to 1400°C for 6 hours, thus producing a block of glass raw material.

Next, the block of glass raw material was coarsely ground into 0.05 to 1.5 g small pieces using a mortar. Using the obtained small pieces of the block of glass raw material, a glass material (diameter: approximately 1 to 10 mm) was produced by a containerless levitation technique using an apparatus conforming to Fig. 2. A 100W CO₂ laser oscillator was used as a heat source. Furthermore, nitrogen gas was used as a gas for levitating the block of glass raw material and supplied at a flow rate of 1 to 30 L/min.

The obtained glass material was measured in terms of Verdet constant and laser damage threshold. The results are shown in Table 1. As seen from Table 1, Examples 1 to 8 showed high laser damage thresholds of 20 to 57 J/cm². On the other hand, Comparative Example 1 showed a low laser damage threshold of 8 J/cm².

Next, each of the obtained glasses was cut and polished, thus obtaining a columnar magneto-optic element having a diameter and a length as shown in Table 1. Using the obtained magneto-optic element, an optical isolator was produced to have a structure shown in Fig. 1. As the tubular magnet, a cylindrical neodymium-iron-boron magnet having a volume and a through hole diameter as shown in Table 1 was used. As the polarizers, Glan-Thompson polarizers (extinction ratio: 50 dB) were used.

A laser beam with a wavelength of 1064 nm, a power of 20 W, and a laser spot diameter of ((the diameter of the magneto-optic element) - 0.8) mm was allowed to enter the produced optical isolator. Examples 1 to 8 showed an angle of rotation of 45° and were therefore confirmed to operate as optical isolators. On the other hand, the magneto-optic element of Comparative Example 1 was damaged.

The Verdet constant was measured using the rotating analyzer method. Specifically, the obtained glass material was polished to have a thickness of 1 mm, the obtained piece was measured in terms of angle of Faraday rotation at a wavelength of 1064 nm in a magnetic field of 10 kOe, and the Verdet constant was then calculated.

The measurement of the laser damage threshold was made by the N-on-1 method using a single-mode Nd:YAG laser with a wavelength of 1064 nm and a pulse width of 10 ns. The N-on-1 method is a method of irradiating a fixed irradiation point on a target member with a laser beam while gradually increasing the energy density of the incident beam, checking the conditions of the target member for each irradiation, and defining as a laser damage threshold the energy density at which damage has occurred on the target member. The laser damage threshold was calculated from the following equation: Laser Damage Threshold = 2 × ((irradiation energy upon occurrence of damage)/(area of beam irradiation)). The area of beam irradiation is the area in which the beam diameter is defined as the width at the 1/e² value of the peak intensity of a Gaussian distribution.

### [Reference Signs List]

- 1: optical isolator
- 2: apparatus for producing glass
- 10: magneto-optic element
- 11: tubular magnet
- 12: polarizer
- 13: polarizer
- 20: forming die
- 20a: forming surface
- 20b: gas jet hole
- 21: gas supply mechanism
- 22: block of glass raw material
- 23: laser light applicator

## Claims

1. A magneto-optic element made of a columnar glass material with a diameter of 20 mm or less and having a laser damage threshold of 10 J/cm² or more.

2. The magneto-optic element according to claim 1, having a length of 2 to 20 mm.

3. The magneto-optic element according to claim 1 or 2, containing, in % by mole, more than 50% (exclusive of 50%) Tb₂O₃ and 5 to 50% (exclusive of 5% and 50%) P₂O₅.

4. An optical isolator comprising:
the magneto-optic element according to any one of claims 1 to 3;
a tubular magnet in which a through hole is formed to allow the magneto-optic element to be inserted through the through hole; and
a pair of polarizers provided above two opposite principal surfaces of the magneto-optic element.

5. The optical isolator according to claim 4, wherein the through hole of the tubular magnet has a diameter of 1 to 21 mm.

6. The optical isolator according to claim 4 or 5, wherein the tubular magnet has a volume of 20 to 100 cm³.
